## Europäisches Patentamt

## European Patent Office

## Office européen des brevets

(11) Veröffentlichungsnummer: **0 106 033**
**A2**

(12) **EUROPÄISCHE PATENTANMELDUNG**

(21) Anmeldenummer: **83107130.3**

(22) Anmeldetag: **21.07.83**

(51) Int. Cl.³: **G 01 B 5/00**

(30) Priorität: **17.09.82 DE 3234471**

(43) Veröffentlichungstag der Anmeldung: **25.04.84**
**Patentblatt 84/17**

(84) Benannte Vertragsstaaten: **AT CH FR GB IT LI NL SE**

(71) Anmelder: **Dr. Johannes Heidenhain GmbH, Nansenstrasse 17, D-8225 Traunreut (DE)**

(72) Erfinder: **Ernst, Alfons, Dipl.-Ing., Traunring 62, D-8225 Traunreut (DE)**

(54) **Mehrkoordinaten-Tastkopf.**

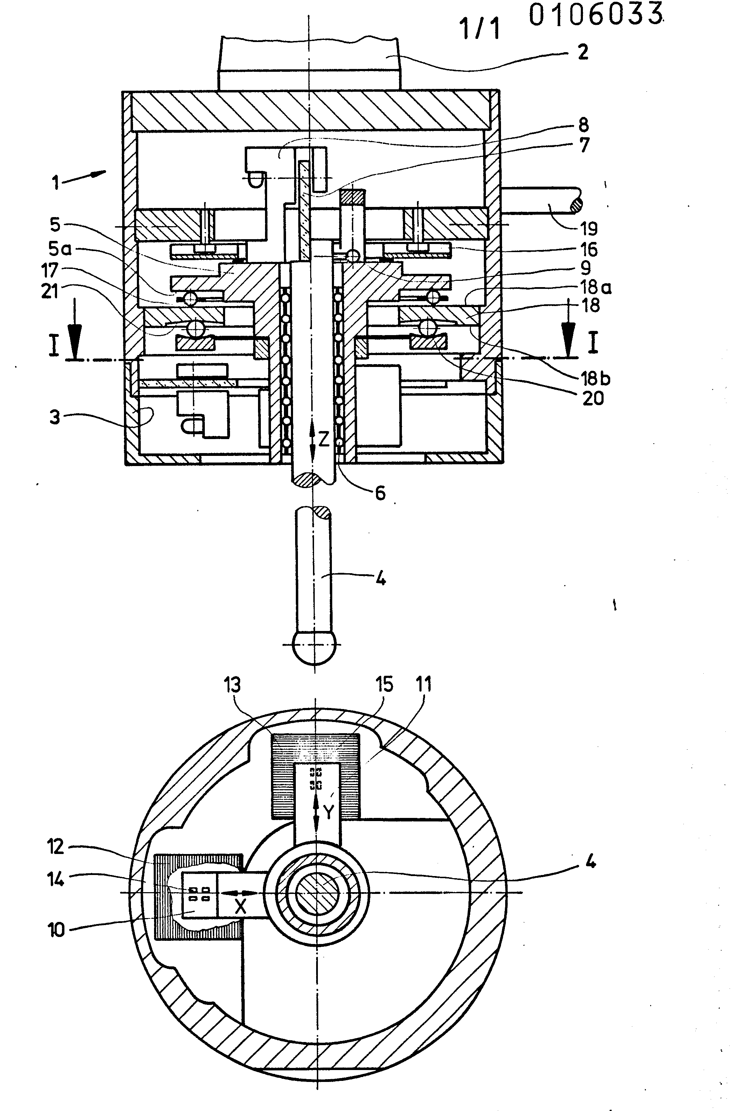

(57) Bei diesem Mehrkoordinatentaster (1) wird die Auslenkung des Taststiftes (4) bei Werkstückantastung in beliebiger Richtung durch präzise Führungen (6, 5a, 18a) ermöglicht. Die Führung für die Taststiftauslenkung in Z-Richtung wird dabei von einer Kugelgeradführung (6) übernommen, die Führung in der X–Y-Ebene erfolgt durch eine ebene Führung (5a, 18a) in zwei Freiheitsgraden. Die Verdrehsicherung wird durch einen Präzisionsanschlag (9) bzw. durch Kulissenführungen (16) gewährleistet. Die Größe der Auslenkung wird von lichtelektrischen Längenmeßeinrichtungen (8, 10, 11) ermittelt, von denen die Meßeinrichtungen (10, 11) für die X–Y-Ebene flächige Gitter als Maßverkörperungen (12, 13) aufweisen (Fig. 1).

- 1 -

DR. JOHANNES HEIDENHAIN GMBH    15. September 1982


Mehrkoordinaten-Tastkopf
=========================

Die Erfindung bezieht sich auf einen Mehrkoordinaten-Tastkopf nach dem Oberbegriff des Anspruches 1.

Es sind Mehrkoordinaten-Tastköpfe zum Antasten von Werkstücken in mehreren Richtungen bekannt. Dabei können die Tastköpfe in zwei Kategorien eingeteilt werden. In der einen Kategorie machen die Taststifte eine Winkelbewegung wenn sie normal zu ihrer Achse ausgelenkt werden. Bei der anderen Kategorie ist der Taststift über Geradführungen beweglich gelagert. In der DE-PS 22 42 355 ist ein elektronischer Mehrkoordinatentaster beschrieben, der durch eine Kombination von Einzelmerkmalen gekennzeichnet ist. Eine torsionssteife Aneinanderreihung von spiel- und reibungsfreien Geradführungssystemen bildet ein definiertes ebenes oder räumliches Koordinatensystem. Diese Aneinanderreihung von Geradführungssystemen verbessert den Stand der Technik wie ausführlich in der Beschreibungseinleitung der genannten Schrift dargelegt ist. Jedoch weist die dort vorgeschlagene Lösung noch Mängel auf, da bei einer dem dortigen Ausführungsbeispiel entsprechenden Aneinanderreihung von Federparallelogrammen das eine Geradführungssystem auf der Genauigkeit des vorgelagerten Geradführungssystemes aufbaut. Um bei einer derartigen Aneinanderreihung von Geradführungen - wie sie auch ein Kreuztisch darstellt - eine den Erfordernissen entsprechende Genauigkeit zu erzielen, müssen die einzelnen Geradführungssysteme mit einer enormen Genauigkeit hergestellt werden. Dies erfordert einen sehr hohen konstruktiven und fertigungstechnischen Aufwand. Zudem ist es eine Eigenheit von als Federparallelogrammen ausgeführten Geradführungssystemen, daß sich bei Auslenkungen der Abstand der parallel zueinander bewegten Platten verändert. Dieser Effekt ist sicher nur bei sehr kleinen Auslenkungen vernachlässigbar klein.

Der Erfindung liegt die Aufgabe zugrunde, einen Mehrkoordinaten-Tastkopf zu schaffen, der nicht die bekannten Nachteile der Tastköpfe gemäß dem Stand der Technik aufweist, der dennoch verhältnismäßig einfach aufgebaut ist, der vielseitig einsetzbar und robust ist.

Diese Aufgabe wird durch einen Tastkopf gelöst, der durch die kennzeichnenden Merkmale des Anspruches 1 gekennzeichnet ist.

Die besonderen Vorteile des erfindungsgemäßen Tastkopfes liegen darin, daß der Taststift in einer Ebene in zwei Freiheitsgrade geführt ist, daß also keine gegenseitige Abhängigkeit von der

- 3 -

jeweiligen Genauigkeit zweier einzelner aneinandergereihter Geradführungssysteme besteht und daß dennoch die gleichen Freiheitsgrade vorhanden sind. Die Geradführungssysteme werden gewissermaßen nicht aneinandergereiht, sondern in eine Ebene gelegt. Ein weiterer vorteilhafter Effekt ist die Verringerung der Bauhöhe durch diese Maßnahme.

Weitere vorteilhafte Ausgestaltungen der Erfindung ergeben sich aus den Unteransprüchen.

Mit Hilfe der Zeichnungen soll anhand eines Ausführungsbeispiels die Erfindung noch näher erläutert werden.

Es zeigen
Figur 1 den Schnitt durch einen schematisch dargestellten Tastkopf,
Figur 2 eine Schnittdarstellung entlang der Linie I-I in Figur 1.

Ein Mehrkoordinaten-Tastkopf 1 weist einen Aufnahmedorn 2 zur Aufnahme des Tastkopfes 1 in der Spindel einer nicht dargestellten Meß- oder Bearbeitungsmaschine auf. Der Tastkopf 1 enthält im Innern seines Gehäuses 3 einen aus dem Gehäuse 3 herausragenden Taststift 4, der in allen Koordinaten eines räumlichen Koordinatensystems auslenkbar ist. Als Auslenkung in der Z-Richtung wird dabei die axiale Auslenkung des Taststiftes 4 verstanden. Der Taststift 4 ist mit seinem Schaft in einer Halterung 5 längsverschieblich und weitestgehend spiel- und reibungsfrei gelagert.

- 4 -

Die praktisch spiel- und reibungsfreie Lagerung wird durch eine Präzisionskugelführung 6 ermöglicht. Am im Gehäuse 3 befindlichen Endes des Taststiftes 4 ist in Verlängerung der Mittelachse des Taststiftes 4 ein Strichgitter 7 als Maßverkörperung für eine digitale elektrische Längenmaßeinrichtung 8 angeordnet. In dieser Z-Richtung arbeitet der Mehrkoordinaten-Tastkopf also nach dem bekannten Abbe- oder Komparatorprinzip. Unter der Wirkung einer nicht dargestellten Feder wird der Taststift 4 nach Auslenkungen immer wieder in seine Ausgangslage - die der Nullpunktlage in der Z-Koordinatenachse entspricht - zurückgestellt. Eine als Präzisionsanschlag 9 ausgebildete Kugel wirkt dabei als Nullpunktanschlag und als Verdrehsicherung des Taststiftes 4.

Bei der Auslenkung des Taststiftes 4 in einer zur Z-Richtung senkrechten Ebene, die durch das X-Y Koordinatensystem bestimmt ist, wird die Auslenkung von den in Figur 2 sichtbaren digitalen elektrischen Längenmeßeinrichtungen 10 und 11 erfaßt. Die Maßverkörperungen der Längenmeßeinrichtungen 10 und 11 sind als flächige Gitter 12 und 13 ausgebildet. Dadurch wird sichergestellt, daß die photoelektrischen Sensoren 14 und 15 sich immer im Bereich einer Maßverkörperung 12 oder 13 befinden, d. h., auch wenn der Taststift 4 in X-Richtung ausgelenkt wird, verlassen die photoelektrischen Sensoren 15 für die Y-Achse nicht die Maßverkörperung 13 für die Y-Achse. Entsprechendes gilt für die Taststiftauslenkung in Y-Richtung.

Bei Auslenkungen des Taststiftes 4, die nicht genau in den rechtwinklig zueinander stehenden Koordinatenachsen erfolgen, werden die Richtungskomponenten von den Sensoren 14 und 15 ermittelt, so daß die Auslenkungskoordinaten bestimmt sind.

Der Taststift 4 wird bei Auslenkungen in der X-Y-Ebene praktisch ebenso spiel- und reibungsfrei geführt, wie in der Z-Richtung. Dies wird durch eine "Ebenenführung" erreicht, die für den Taststift 4 eine Bewegung in zwei Freiheitsgraden zuläßt. Ein dritter Freiheitsgrad, die Drehung, wird in bekannter Weise durch ein Zwischenstück mit zwei gekreuzt angeordneten Kulissenführungen 16 verhindert.

Die Halterung 5 für den Taststift 4 erstreckt sich tellerartig vom Zentrum zum Außenbereich des Gehäuses 3. Auf der Unterseite 5a des Tellers ist durch Methoden der Bearbeitung optischer Flächen, beispielsweise durch Läppen, eine äußerst ebene und genau zur Taststiftachse senkrechte Fläche geschaffen, die als Kugellauffläche 5a für ein Präzisionskugeln 17 dienst. Eine Scheibe 18 im Gehäuse 3 bildet eine Stützfläche 18a für das Kugellager 17. Diese Stützfläche 18a ist ebenfalls durch Läppen bearbeitet. Das Kugellager 17 läuft durch Federvorspannung zwischen der Kugellauffläche 5a, der Halterung 5 und der Stützfläche 18a praktisch spielfrei. Damit ist eine spiel- und reibungsfreie Auslenkung des Taststiftes 4 in der Ebene, die durch die X-Y-Koordinaten definiert wird, gewährleistet. Der Taststift 4 ist mittels seiner Halterung 5 in beliebiger Richtung in dieser Ebene auslenkbar, gegen Verdrehung ist er durch die Kreuzkulisse 16 gehindert. Die Auslenkbewegungen werden von den vorbeschriebenen Längenmeßeinrichtungen 10 und 11 erfaßt und zusammen mit einer eventuellen Auslenkung in Z-Richtung - die von der Meßeinrichtung 8 registriert wird - über ein Kabel 19 in eine bekannte und daher nicht dargestellten Auswerteeinrichtung übertragen und gegebenenfalls in einer Steuereinrichtung für die Maschine verarbeitet.

Anstelle des Kabelausganges 19 für die Auslenksignale kann der Fachmann auch eine drahtlose Übertragungseinrichtung vorsehen.

Die präzise Rückstellung der Auslenkung in der X-Y-Ebene kann durch angefderte Kugeln 20 erfolgen, die sich in kegeligen Gegenlagern 21 auf der Unterseite 18b der Scheibe 18 selbst zentrieren. Dadurch wird der Taststift 4 mit seiner Halterung 5 immer exakt in die Nullpunktlage des X-Y-Koordinatensystems zurückgestellt. Selbstverständlich kann auch eine andere, dem Fachmann geläufige Rückstelleinrichtung vorgesehen sein.

- 7 -

Ansprüche
=========

1. Mehrkoordinaten-Tastkopf mit wenigstens einem, in mehrere Koordinatenrichtungen auslenkbaren Taststift, einer Einrichtung zum Rückstellen des Taststiftes in die Koordinatennullpunktlage und mit wenigstens einem elektrischen Signalgeber zur Erfassung der Taststiftauslenkung, dadurch gekennzeichnet, daß der Taststift (4) mittels einer Halterung (5, 5a) und einer Stützfläche (18, 18a) verdrehsicher und weitestgehend spiel- und reibungsfrei wenigstens in einer Führung (5a, 18a) mit zwei Freiheitsgraden (ebene Führung) geführt ist.

2. Mehrkoordinaten-Tastkopf nach Anspruch 1, dadurch gekennzeichnet, daß für den Taststift (4) eine Kombination einer ebenen Führung (5a, 18a) und einer zu dieser senkrecht angeordneten Geradführung (6) vorgesehen ist.

3. Mehrkoordinaten-Tastkopf nach Anspruch 1, dadurch gekennzeichnet, daß zur Erfassung der Taststiftauslenkung für jede Koordinatenrichtung ein elektrischer Signalgeber (8, 10, 11) vorgesehen ist.

4. Mehrkoordinaten-Tastkopf nach Anspruch 1 bis 3, dadurch gekennzeichnet, daß die elektrischen Signalgeber (8, 10, 11) als lichtelektrische Längenmeßeinrichtungen ausgebildet sind.

0106033

- 8 -

5. Mehrkoordinaten-Tastkopf nach Anspruch 4, dadurch gekennzeichnet, daß die Maßverkörperungen (12, 13) der lichtelektrischen Längenmeßeinrichtungen (10, 11) als flächige Gitter ausgebildet sind.

6. Mehrkoordinaten-Tastkopf nach Anspruch 1, dadurch gekennzeichnet, daß die Verdrehsicherung des Taststiftes (4) durch Kulissenführungen (16) gebildet wird.

7. Mehrkoordinaten-Tastkopf nach Anspruch 1, dadurch gekennzeichnet, daß Spiel- und Reibungsfreiheit durch Kugeln (17) erzeugt wird, die zwischen der Halterung (5) und der Stützfläche (18a) unter Vorspannung liegen.

8. Mehrkoordinaten-Tastkopf nach den Ansprüchen 1 und 7, dadurch gekennzeichnet, daß die Kugellaufflächen (5a) der Halterung (5) und der Stützfläche (18a) durch Methoden zur Bearbeitung optischer Flächen hergestellt sind.

9. Mehrkoordinaten-Tastkopf nach Anspruch 2, dadurch gekennzeichnet, daß die Geradführung (6) eine Präzisionskugelführung ist.

10. Mehrkoordinaten-Tastkopf nach Anspruch 1, dadurch gekennzeichnet, daß die Rückstelleinrichtung in der X-Y-Ebene durch Kugeln (20) gebildet wird, die zwischen kegeligen Teilflächen zweier gegeneinander mit Federn vorgespannten Elemente liegen.